# EUROPÄISCHE PATENTSCHRIFT

(11) **EP 0 973 839 B1**
(45) Veröffentlichungstag und Bekanntmachung des Hinweises auf die Patenterteilung: **06.03.2002**
(21) Anmeldenummer: 98921432.5
(22) Anmeldetag: 06.04.1998
(51) Int. Cl.: C09D 175/04, C09D 175/14, C09D 5/02

(54) **MISCHSYSTEM ZUR HERSTELLUNG WASSERVERDÜNNBARER ÜBERZUGSMITTEL**
MIXING SYSTEM FOR THE PRODUCTION OF WATER-DILUTABLE COATING AGENTS
SYSTEME DE MELANGE POUR PREPARER UN AGENT DE REVETEMENT DILUABLE DANS L'EAU

(30) Priorität: 09.04.1997 DE 19714577
(43) Veröffentlichungstag der Anmeldung: 26.01.2000
(73) Patentinhaber: BASF Coatings AG, 48165 Münster (DE)
(72) Erfinder: REUSMANN, Gerhard, D-48147 Münster (DE); LETTMANN, Bernhard, D-48317 Drensteinfurt (DE); WEGNER, Egon, D-48143 Münster (DE)
(74) Vertreter: Fitzner, Ulrich, Dr.
(86) Internationale Anmeldenummer: EP9801984
(87) Internationale Veröffentlichungsnummer: WO9845381

(56) Entgegenhaltungen:
- EP-A- 0 328 037
- EP-A- 0 575 859
- WO-A-92/17554
- DE-A- 4 328 092
- DE-A- 4 339 870

## Beschreibung

Gegenstand der vorliegenden Erfindung ist ein Mischsystem zur Herstellung von wasserverdünnbaren Überzugsmitteln mit genau festgelegter Tönung aus verschiedenen Basisfarben mit verbesserter Schwitzwasserbeständigkeit.

### Stand der Technik

Übliche Verfahren zur Ausbesserung von Schadstellen an einer gegebenenfalls mehrschichtigen Lackierung beinhalten die sorgfältige Reinigung und Schleifen, gegebenenfalls Spachteln und Füllern an der Schadstelle. Danach wird die Schadstelle gegebenenfalls nach einer weiteren Vorbehandlung üblicherweise deckend und auslaufend in die angrenzenden Bereiche hinein mit Effektlacken, wie z.B. Metallicbasislacken, oder mit Unilacken gespritzt. Nach Antrocknung des so hergestellten Überzuges werden der Überzug und die angrenzenden Teile mit einem Klarlack überspritzt und nach einer gegebenenfalls notwendigen Ablüftzeit wird der Klarlacküberzug gemeinsam mit den vorher aufgebrachten Schichten vorzugsweise bei Temperaturen zwischen 50 und 100°C getrocknet.

Als Effektlacke und/oder im Zweischichtverfahren aufgebrachte Unilacke für das Ausbessern von Schadstellen werden üblicherweise festkörperarme Lacke verwendet, die neben Bindemitteln farb- und/oder effektgebende Pigmente und einen hohen Anteil organischer Lösemittelgemische enthalten.

Diese Lacke werden entweder vom Lackhersteller im gewünschten Farbton geliefert, oder der Farbton wird vor der Applikation aus einem Mischsystem mehrerer Basisfarben hergestellt. Diese Herstellung aus einem Mischsystem hat den Vorteil, daß nicht jeder Farbton einzeln hergestellt und bevorratet werden muß und daß somit Produktions-, Distributions- und Lagerhaltungskosten gesenkt werden können. In beiden Fällen ist es notwendig, daß die gelieferten Lacke eine ausreichende Lagerstabilität (mindestens 12 Monate) aufweisen. Für ein Mischsystem hat außerdem die Farbtongenauigkeit der Basisfarben eine große Bedeutung.

Während im Bereich der Serienlackierung zunehmend wasserverdünnbare Basislacke eingesetzt werden, werden im Bereich der Autoreparaturlackierung noch konventionelle, d.h. lösemittelhaltige, Basislacke eingesetzt. Diese bisher für die Reparaturlackierung verwendeten festkörperarmen Basislacke haben eine von den bisher für die Serienlackierung verwendeten wasserverdünnbaren Basislacken deutlich verschiedene Zusammensetzung. So erfolgt beispielsweise die Rheologiesteuerung bei den konventionellen Systemen zum größten Teil über die Verdunstungsgeschwindigkeit der organischen Lösemittel (Festkörperanstieg zwischen Applikationsgerät und zu lackierendem Objekt), während bei den wäßrigen Systemen die Rheologiesteuerung durch externe Verdickungsmittel oder durch entsprechende Modifikationen im Bindemittel erfolgt. Für den Übergang von konventionellen zu wasserverdünnbaren Systemen ist daher ein bloßer Austausch der verwendeten Bindemittel gegen wasserverdünnbare Bindemittel nicht ausreichend.

Aus wirtschaftlichen Gründen, zur Verbesserung der Arbeitssicherheit (Brandschutz) und zur Verringerung der Umweltbelastung beim Trocknen der Lackfilme ist man auch im Bereich der Reparaturlackierung bemüht, organische Lösemittel in den Überzugsmitteln so weit wie möglich zu reduzieren. Die mangelnde Lagerstabilität der bekannten wasserverdünnbaren Basislacke verhinderte jedoch bisher den Aufbau eines oben beschriebenen Mischsystems aus derartigen wasserverdünnbaren Basislacken.

Gemäß DE-A 41 10 520 wird ein Mischsystem zur Verfügung gestellt, das die Herstellung wasserverdünnbarer Überzugsmittel mit genau festgelegter Tönung aus verschiedenen Basisfarben ermöglicht. Insbesondere ermöglicht dieses Mischsystem die Herstellung wäßriger Überzugsmittel, die für die Reparaturlackierung, insbesondere von Schadstellen an Automobilkarossen, geeignet sind. Dabei wird eine hohe Farbtongenauigkeit der Basisfarben gewährleistet, was es ermöglicht, die gewünschten Farbtöne ohne aufwendige Maßnahmen beim Lackierer exakt und reproduzierbar einzustellen.

Weiterhin weisen die Mischsysteme gemäß DE-A 41 10 520 eine sehr gute Lagerstabilität (> 12 Monate) auf, und schließlich führen die unter Verwendung dieses Mischsystems hergestellten wäßrigen Überzugsmittel sowohl im Falle von Effektlacken als auch im Falle von Unifarbtönen zu Beschichtungen mit guten mechanischen Eigenschaften.

Mischsysteme gemäß DE-A 41 10 520 bestehen aus:
A) verschiedenen Basisfarben A, die weniger als 5 Gew.-% Wasser, mindestens ein farb- und/oder effektgebendes Pigment, organisches Lösemittel, mindestens ein wasserverdünnbares oder wasserdispergierbares Bindemittel sowie gegebenenfalls Hilfs- und Zusatzstoffe enthalten, und
B) mindestens einer wasserenthaltenden, pigmentfreien Komponente B.

Weiterhin von DE-A 41 10 520 umfaßt ist auch ein Verfahren zur Herstellung von wasserverdünnbaren Überzugsmitteln mit genau festgelegter Tönung, bei dem verschiedene Basisfarben eines Mischsystems getrennt hergestellt und gelagert werden und erst kurz vor der Applikation des Überzugsmittels gemischt werden, dadurch gekennzeichnet, daß das erfindungsgemäße Mischsystem eingesetzt wird.

Schließlich betrifft die DE-A 41 10 520 auch die Verwendung der Mischsysteme zur Herstellung von wäßrigen Überzugsmitteln für die Reparaturlackierung, insbesondere zur Herstellung von Wasserbasislacken für die Reparaturlackierung, insbesondere von Automobilkarossen.

### Aufgabe und Lösung

In neuerer Zeit sind die Anforderungen an die Wasser- und Feuchtigkeitsbeständigkeit, insbesondere an die Schwitzwasserbeständigkeit, von Autoreparaturlacken gestiegen.

Dies machte erforderlich, die Schwitzwasserbeständigkeit der Überzüge, die mit dem Mischsystem gemäß DE-A 41 10 520 erhalten werden können, weiter zu steigern.

Überraschenderweise wurde gefunden, daß die Schwitzwasserbeständigkeit der Mischsysteme nach DE-A 41 10 520 deutlich gesteigert werden kann, wenn der dort beschriebenen Mischkomponente B) als Bindemittel ein Polymer zugesetzt wird, das erhältlich ist, indem in einer wäßrigen Dispersion eines Polyurethanharzes, das ein zahlenmittleres Molekulargeicht zwischen 1.000 und 30.000 Dalton und im statistischen Mittel 0,05 bis 1,1 polymerisierbare Doppelbindungen aufweist, ein ethylenisch ungesättigtes Monomer oder ein Gemisch aus ethylenisch ungesättigten Monomeren in Gegenwart eines wasserunlöslichen Initiators radikalisch polymerisiert wird, wobei das Gewichtsverhältnis zwischen dem Polyurethanharz und dem ethylenisch ungesättigten Monomeren bzw. Monomergemisch zwischen 1:10 und 10:1 liegt. Solche Polymere sind in DE-A 43 39 870 beschrieben.

Das erfindungsgemäße Mischsystem besteht also aus den Komponenten:
A) verschiedenen Basisfarben A, die weniger als 5 Gew.-% Wasser, mindestens ein farb- und/oder effektgebendes Pigment, organisches Lösemittel, mindestens ein wasserverdünnbares oder wasserdispergierbares Bindemittel sowie gegebenenfalls Hilfs- und Zusatzstoffe enthalten, und
B) mindestens einer wasserenthaltenden, pigmentfreien Komponente B, enthaltend eine wäßrige Dispersion eines acrylierten Polyurethanharzes gemäß DE-A 43 39 870.

### Die Komponente A des Mischsystems

Im folgenden sollen nun die einzelnen Komponenten des erfindungsgemäßen Mischsystems näher erläutert werden.

Die Komponente A des Mischsystems kann alle lacküblichen Pigmente enthalten, vorausgesetzt, daß sie nicht innerhalb kurzer Zeit (Zeitspanne zwischen dem Zusammenrühren der Komponenten A und B und der Applikation der Lacke) mit Wasser reagieren und daß sie sich nicht in Wasser lösen. Die Komponente A kann dabei Effektpigmente und/oder farbgebende Pigmente auf anorganischer oder organischer Basis enthalten. Um eine möglichst universelle Einsatzbreite zu gewährleisten und um möglichst viele Farbtöne realisieren zu können, ist es bevorzugt, ein Mischsystem auf der Basis von nur farbgebende Pigmente enthaltenden Komponenten A und nur Effektpigmente enthaltenden Komponenten A aufzubauen.

Zur Herstellung der Komponente A können alle üblicherweise bei der Formulierung von wäßrigen Überzugsmitteln eingesetzten Effektpigmente eingesetzt werden. Beispiele für geeignete Effektpigmente sind handelsübliche Aluminiumbronzen, die gemäß DE-A 36 36 183 chromatierten Aluminiumbronzen, handelsübliche Edelstahlbronzen sowie andere übliche Metallplättchen und Metallflockenpigmente. Für die Herstellung der Komponente A sind auch nicht metallische Effektpigmente, wie zum Beispiel Perlglanz- bzw. Interferenzpigmente geeignet.

Beispiele für geeignete farbgebende Pigmente auf anorganischer Basis sind Titandioxid, Eisenoxide, Ruß u.ä. Beispiele für geeignete farbgebende Pigmente auf organischer Basis sind Indanthrenblau, Cromophthalrot, Irgazinorange, Sicotransgelb, Heliogengrün u.ä.

Als Bindemittel für den Einsatz in der Komponente A sind alle wasserverdünnbaren bzw. wasserdispergierbaren Bindemittel geeignet, die üblicherweise in wäßrigen Überzugsmitteln eingesetzt werden und die sich in Form organischer Lösungen darstellen lassen. Die Wasserverdünnbarkeit bzw. Wasserdispergierbarkeit der Harze kann dabei auch durch Verwendung entsprechender Lösevermittler als Cosolvens bzw. Solvens eingestellt werden. Entscheidend für die Auswahl der Bindemittel ist einerseits die gute Lagerstabilität in organischer Lösung, insbesondere auch die Fähigkeit, ein Absetzen der Pigmente zu vermeiden, sowie andererseits die problemlose Einarbeitbarkeit der Basisfarbe in die Komponente B bzw. die problemlose Einarbeitbarkeit der Komponente B in die Basisfarbe. Die Einarbeitbarkeit der Basisfarbe in die Komponente B bzw. die umgekehrte Einarbeitbarkeit können zwar auch durch die Verwendung von Dispergieradditiven, wie zum Beispiel ionische oder nichtionische Tenside, gesteuert werden. Derartige Additive sollten aber in möglichst geringen Mengen eingesetzt werden, um die Wasserfestigkeit der resultierenden Beschichtungen nicht zu beeinträchtigen.

Insbesondere werden als Bindemittel für die Komponente A wasserverdünnbare bzw. wasserdispergierbare und in organischer Lösung darstellbare Polyurethanharze, Polyacrylatharze, Polyesterharze und Aminoplastharze sowie deren Mischungen eingesetzt.

Die als Bindemittel in den Basisfarben eingesetzten Polyurethanharze sind prinzipiell bekannt. Geeignet sind beispielsweise die in der Literatur für den Einsatz in Wasserbasislacken beschriebenen Polyurethanharze, sofern diese Polyurethanharze - in Abwandlung der in der jeweiligen Literatur beschriebenen Herstellung - in Form organischer Lösungen darstellbar sind.

Beispiele für geeignete Polyurethanharze sind die in den folgenden Schriften beschriebenen Harze:

EP-A 0 355 433, DE-A 35 45 618, DE-A 38 13 866 sowie DE-A 40 05 961. Bezüglich näherer Einzelheiten der Herstellung der Polyurethanharze und Beispiele geeigneter Verbindungen sei daher auf diese Schriften verwiesen. Die Polyurethanharze kommen allerdings im Unterschied zu den in diesen Schriften beschriebenen Polyurethanharzen nicht als wäßrige Dispersion, sondern in einem oder mehreren organischen Lösungsmitteln gelöst zum Einsatz. Dies bedeutet, daß das Herstellverfahren der erfindungsgemäß eingesetzten Polyurethanharze gegenüber den in diesen Schriften beschriebenen Verfahren dahingehend geändert wurde, daß statt der Herstellung einer Sekundärdispersion ein Lösen der Polyurethanharze in organischen Lösemitteln erfolgt. Bezüglich der Eigenschaften der Zusammensetzung und der Herstellung solcher Polyurethanharze im einzelnen sei auf DE-A 41 10 520 verwiesen.

Die als Bindemittel für die Komponente A eingesetzten Polyacrylatharze sind ebenfalls bekannt und beispielsweise in DE-A 38 32 826 beschrieben. Geeignet sind allgemeinen wasserverdünnbare bzw. wasserdispergierbare Polyacrylatharze, die sich in Form organischer Lösungen darstellen lassen.

Als Bindemittel für die Komponente A geeignet sind auch wasserverdünnbare bzw. wasserdispergierbare und in Form organischer Lösungen darstellbare Polyesterharze. Eingesetzt werden beispielsweise entsprechende handelsübliche wasserverdünnbare bzw. wasserdispergierbare Polyesterharze sowie die überlicherweise in Wasserbasislacken eingesetzten Polyesterharze.

Als Bindemittel für die Komponente A sind auch wasserverdünnbare bzw. wasserdispergierbare Aminoplastharze geeignet. Bevorzugt werden wasserverdünnbare Melaminharze eingesetzt. Es handelt sich hierbei im allgemeinen um veretherte Melamin-Formaldehyd-Kondensationsprodukte. Die Wasserlöslichkeit der Aminoplastharze hängt - abgesehen vom Kondensationsgrad, der möglichst gering sein soll - von der Veretherungskomponente ab, wobei nur die niedrigsten Glieder der Alkohol bzw. Ethylenglykolmonoetherreihe wasserlösliche Kondensate ergeben Die größte Bedeutung haben die mit Methanol veretherten Melaminharze. Bei Verwendung von Lösungsvermittlern können auch butanolveretherte Melaminharze in wäßriger Phase dispergiert werden. Es besteht auch die Möglichkeit, Carboxylgruppen in das Kondensat einzufügen.

Umetherungsprodukte hochveretherter Formaldehydkondensate mit Oxycarbonsäuren sind über ihre Carboxylgruppen nach Neutralisation wasserlöslich und können in den Basisfarben enthalten sein.

Als Bindemittel können in den Basisfarben A selbstverständlich auch Mischungen der genannten Bindemittel sowie zusätzlich oder alleine andere wasserverdünnbare bzw. wasserdispergierbare Bindemittel eingesetzt werden.

Bevorzugt enthalten die Basisfarben A als Bindemittel wasserverdünnbare Polyurethanharze oder wasserverdünnbare Aminoplastharze oder Mischungen aus wasserverdünnbaren Polyurethanharzen und Aminoplastharzen.

Es ist erfindungswesentlich, daß die Basisfarben A im wesentlichen wasserfrei, bevorzugt völlig wasserfrei sind. Der Wassergehalt der Basisfarben sollte weniger als 5 Gew.-%, bezogen auf das Gesamtgewicht der Basisfarbe, betragen.

Als Lösemittel enthält die Basisfarbe ein oder mehrere organische Lösemittel. Beispiele für geeignete Lösemittel sind insbesondere wasserlösliche bzw. wasserverdünnbare Lösemittel, wie z.B. Alkohole, Ester, Ketone, Ketoester, Glykoletherester u.ä. Bevorzugt eingesetzt werden Alkohole und Glykolether, besonders bevorzugt Butylglykol und Butanole.

Es besteht dabei die Möglichkeit, bereits bei der Herstellung der Bindemittel Lösemittel einzusetzen, die auch später als Lösemittel in der Basisfarbe verbleiben. Häufiger wird jedoch zur Herstellung der Bindemittel ein anderes Lösungsmittel eingesetzt, das nach der Herstellung der Bindemittel durch Vakuumdestillation oder Dünnschichtverdampfung schonend abdestilliert und durch ein Lösemittel ersetzt wird, das in der Bindemittellösung verbleibt, die dann in der Basisfarbe eingesetzt wird. Höhersiedende Lösemittel sollten wasserlöslich sein und verbleiben in der Polyurethanharzlösung, die in der Basisfarbe eingesetzt wird, um das Zusammenfließen der Polymerteilchen während der Filmbildung zu erleichtern.

So erfolgt beispielsweise die Herstellung der Polyurethanharzlösung in einem Keton, wie z. B. Methylethylketon oder Aceton. Nach Zugabe von Buylglykol erfolgt anschließend der Lösemittelaustausch durch destillative Entfernung des Ketons (Methylethylketon, Aceton). Besonders bevorzugt sind als Lösemittel für die Herstellung des Polyurethanharzes solche, die nicht ausgetauscht werden müssen (kein aktiver Wasserstoff) und in der Komponente A verbleiben können, wie beispielsweise Methoxypropylacetat, Ethoxyethylacetat, Ethoxyethylpropionat und N-Methylpyrrolidin. Gegebenenfalls können diese Lösemittel für die Herstellung der Polyurethanharze auch im Gemisch mit Ketonen eingesetzt werden, wobei die Ketone aber nicht in der Basisfarbe verbleiben, sondern nach Herstellung des Polyurethanharzes ausgetauscht werden.

Die Komponente A kann außerdem noch übliche Hilfs- und Zusatzstoffe enthalten. Beispiele für derartige Additive sind Entschäumer, Dispergierhilfsmittel, Emulgatoren, Verlaufsmittel und andere.

Die Herstellung der Komponente A erfolgt nach dem Fachmann bekannten Methoden durch Mischen und gegebenenfalls Dispergieren der einzelnen Komponenten. So erfolgt die Einarbeitung von farbgebenden Pigmenten üblicherweise durch Anreiben (Dispergieren) der jeweiligen Pigmente mit einem oder mehreren der obenbeschriebenen Bindemittel, die bevorzugt in Form ihrer Lösungen in organischen Lösemitteln eingesetzt werden. Gegebenenfalls kann zum Anreiben noch weiteres organisches Lösemittel zugesetzt werden. Das Anreiben dieser Pigmente erfolgt mit Hilfe üblicher Vorrichtungen, wie beispielsweise Perlmühlen und Sandmühlen.

Die Einarbeitung der Effektpigmente erfolgt üblicherweise durch homogenes Mischen der Effektpigmente mit einem oder mehreren Lösemitteln. Diese Mischung wird dann in eine Mischung eines oder mehrerer der oben beschriebenen Bindemittel, gegebenenfalls unter Zusatz von weiteren organischen Lösemitteln, mittels eines Rührers oder Dissolvers eingerührt. Die Bindemittel werden bevorzugt in Form ihrer Lösungen in organischen Lösemitteln eingesetzt.

Die jeweiligen Mengenverhältnisse an Pigment, Bindemittel und Lösemittel richten sich dabei, wie dem Fachmann geläufig ist, nach dem Fließverhalten der Pigmentpaste und sind damit abhängig von dem jeweils verwendeten Pigment.

### Die Komponente B des Mischsystems

Einen weiteren Bestandteil des Mischsystems stellt die wasserhaltige Komponente B dar.

Als erfindungswesentlichen Bestandteil enthält die Komponente B als Bindemittel ein Polymer, das in DE-A 43 39 870 beschrieben und das erhältlich ist, indem in einer wäßrigen Dispersion eines Polyurethanharzes, das ein zahlenmittleres Molekulargewicht Mn von 1.000 bis 30.000 Dalton aufweist und im statistischen Mittel pro Molekül 0,05 bis 1,1 polymerisierbare Doppelbindungen enthält, ein ethylenisch ungesättigtes Monomer oder ein Gemisch aus ethylenisch ungesättigten Monomeren in Gegenwart eines wasserunlöslichen Initiators oder einer Mischung aus wasserunlöslichen Initiatoren radikalisch polymerisiert wird, wobei das Gewichtsverhältnis zwischen dem Polyurethanharz und dem ethylenisch ungesättigten Monomeren bzw. dem Gemisch aus ethylenisch ungesättigten Monomeren zwischen 1:10 und 10:1 liegt.

Die wäßrige Dispersion des Polyurethanharzes, in der das ethylenisch ungesättigte Monomer bzw. das Gemisch aus ethylenisch ungesättigten Monomeren in Gegenwart eines wasserunlöslichen Initiators oder einer Mischung aus wasserunlöslichen Initiatoren radikalisch polymerisiert wird, ist gemäß DE-A 43 39 870 herstellbar, indem aus
(a) einem Polyester- und/oder Polyetherpolyol mit einem zahlenmittleren Molekulargewicht von 400 bis 5000 oder einem Gemisch aus solchen Polyester- und/oder Polyetherpolyolen und
(b) einem Polyisocyanat oder einem Gemisch aus Polyisocyanaten, gegebenenfalls zusammen mit einem Monoisocyanat oder einem Gemisch aus Monoisocyanaten und
(c) einer Verbindung, die mindestens eine gegenüber Isocyanatgruppen reaktive und mindestens eine zur Anionenbildung befähigte Gruppe im Molekül aufweist oder einem Gemisch aus solchen Verbindungen oder
(d) einer Verbindung, die mindestens eine gegenüber NCO-Gruppen reaktive Gruppe und mindestens eine Poly(oxyalkylen)gruppe im Molekül aufweist, oder einem Gemisch aus solchen Verbindungen oder
(e) einer Mischung aus den Komponenten (c) und (d) und
(f) gegebenenfalls einer Verbindung, die neben einer polymerisierbaren Doppelbindung mindestens noch eine gegenüber NCO-Gruppen reaktive Gruppe enthält oder einem Gemisch aus solchen Verbindungen und
(g) gegebenenfalls einer Hydroxyl- und/oder Aminogruppen enthaltenden organischen Verbindung mit einem Molekulargewicht von 60 bis 399 oder einem Gemisch aus solchen Verbindungen,
ein Polyurethanharz, das ein zahlenmittleres Molekulargewicht von 1.000 bis 30.000, vorzugsweise 1500 bis 20.000 aufweist und im statistischen Mittel 0,05 bis 1,1, vorzugsweise 0,2 bis 0,9 polymerisierbare Doppelbindungen enthält, hergestellt und in Wasser dispergiert wird.

Das Polyurethanharz kann sowohl in Substanz als auch in organischen Lösemitteln hergestellt werden.

Das Polyurethanharz kann durch gleichzeitige Umsetzung aller Ausgangsverbindungen hergestellt werden. In vielen Fällen ist es jedoch zweckmäßig, das Polyurethanharz stufenweise herzustellen. So ist es zum Beispiel möglich, aus den Komponenten (a) und (b) ein isocyanatgruppenhaltiges Präpolymer herzustellen, das dann mit der Komponente (c) oder (d) oder (e) weiter umgesetzt wird. Weiter ist es möglich, aus den Komponenten (a) und (b) und (c) oder (d) oder (e) und gegebenenfalls (f) ein isocyanatgruppenhaltiges Präpolymer herzustellen, das dann mit der Komponente (g) zu einem höhermolekularen Polyurethanharz umgesetzt werden kann. Die Umsetzung mit der Komponente (g) kann in Substanz oder - wie beispielsweise in der EP-A 0 297 576 beschrieben - in Wasser durchgeführt werden. In den Fällen, in denen als Komponente (f) eine Verbindung eingesetzt wird, die nur eine gegenüber Isocyanatgruppen reaktive Gruppe enthält, kann in einer ersten Stufe aus (b) und (f) ein isocyanatgruppenhaltiges Vorprodukt hergestellt werden, das anschließend mit den weiteren Komponenten weiter umgesetzt werden kann.

Die Umsetzung der Komponenten (a) bis (g) kann auch in Gegenwart von Katalysatoren, wie z.B. Dibutylzinndilaurat, Dibutylzinnmaleat und tertiären Aminen durchgeführt werden.

Die einzusetzenden Mengen an Komponente (a), (b), (c), (d), (e), (f) und (g) ergeben sich aus dem anzustrebenden zahlenmittleren Molekulargewicht und der anzustrebenden Säurezahl. Die polymerisierbaren Doppelbindungen können durch Einsatz von polymerisierbare Doppelbindungen aufweisende Komponenten (a) und/oder polymerisierbare Doppelbindungen aufweisende Komponenten (b) und/oder die Komponente (f) in die Polyurethanmoleküle eingeführt werden. Es ist bevorzugt, die polymerisierbaren Doppelbindungen über die Komponente (f) einzuführen. Außerdem ist es bevorzugt, Acrylat-, Methacrylat oder Allylethergruppen als polymerisierbare Doppelbindungen enthaltende Gruppen in die Polyurethanharzmoleküle einzuführen.

Als Komponente (a) können gesättigte und ungesättigte Polyester- und/oder Polyetherpolyole, insbesondere Polyester- und/oder Polyetherdiole mit einem zahlenmittleren Molekulargewicht von 400 bis 5000 eingesetzt werden. Zu den Komponenten (a) im einzelnen sei auf DE-A 43 39 870 verwiesen.

Als Komponente (b) können aliphatische und/oder cycloaliphatische und/oder aromatische Polyisocyanate eingesetzt werden. Als Beispiele für aromatische Polyisocyanate werden Phenylendiisocyanat, Toluylendiisocyanat, Xylylendiisocyanat, Biphenylendiisocyanat, Naphtylendiisocyanat und Diphenylmethandiisocyanat genannt.Aufgrund ihrer guten Beständigkeit gegenüber ultraviolettem Licht ergeben (cyclo)aliphatische Polyisocyanate Produkte mit geringer Vergilbungsneigung. Zu den Komponenten (b) im einzelnen sei auf DE-A 43 39 870 verwiesen.

Um das in Rede stehende Polyurethanharz in Wasser stabil dispergieren zu können, muß es hydrophile Gruppen enthalten. Diese hydrophilen Gruppen werden durch die Komponente (c) oder die Komponente (d) oder die Komponente (e) in das Polyurethanharz eingeführt. Die zur Anionenbildung befähigten Gruppen der Komponente (c) werden vor oder während der Dispergierung des Polyurethanharzes in Wasser mit einer Base, vorzugsweise einem tertiären Amin, wie z.B. Dimethylethanolamin, Triethylamin, Tripropylamin und Tributylamin neutralisiert, so daß das Polyurethanharz nach der Neutralisation anionische Gruppen enthält. In dem Falle, in dem ausschließlich die Komponente (c) als hydrophile Gruppen liefernde Komponente eingesetzt wird, wird die Komponente (c) in einer solchen Menge eingesetzt, daß das Polyurethanharz eine Säurezahl von 15 bis 80 mg KOH/g, vorzugsweise 20 bis 60 mg KOH/g, aufweist. In dem Fall, in dem ausschließlich die Komponente (d) als hydrophile Gruppen liefernde Komponente eingesetzt wird, wird die Komponente (d) in einer solchen Menge eingesetzt, daß das Polyurethanharz 5 bis 40, vorzugsweise 10 bis 30 Gew.% Oxyalkylengruppen enthält, wobei eventuell durch die Komponente (a) eingeführte Oxyalkylengruppen mit einzurechnen sind. In dem Fall, in dem die Komponente (e) als hydrophile Gruppe liefernde Komponente eingesetzt wird, liegen die einzusetzenden Mengen an Komponente (c) und (d) entsprechend dem Mischungsverhältnis zwischen den oben angegebenen Werten für die Fälle, in denen die Komponente (c) bzw. (d) als alleiniger Lieferant für hydrophile Gruppen eingesetzt werden. Im übrigen kann der Fachmann die Mengen an einzusetzender Komponente (c), (d) oder (e) problemlos durch einfache Routineversuche ermitteln. Er muß lediglich mittels einfacher Reihenversuche prüfen, wie hoch der Anteil an hydrophilen Gruppen mindestens sein muß, um eine stabile wäßrige Polyurethanharzdispersion zu erhalten. Er kann selbstverständlich auch noch allgemein übliche Dispergierhilfsmittel, wie z.B. Emulgatoren mitverwenden, um die Polyurethanharzdispersionen zu stabilisieren. Die Mitverwendung von Dispergierhilfsmitteln ist jedoch nicht bevorzugt, weil dadurch im allgemeinen die Feuchtigkeitsempfindlichkeit der erhaltenen Lackierungen erhöht wird.

Als Komponente (c) werden vorzugsweise Verbindungen eingesetzt, die zwei gegenüber Isocyanatgruppen reaktive Gruppen im Molekül enthalten. Geeignete gegenüber Isocyanatgruppen reaktive Gruppen sind insbesondere Hydroxylgruppen, sowie primäre und/oder sekundäre Aminogruppen. Geeignete zur Anionenbildung befähigte Gruppen sind Carboxyl-, Sulfonsäure- und/oder Phosphonsäuregruppen, wobei Carboxylgruppen bevorzugt sind. Zu den Komponenten (c) im einzelnen sei auf DE-A 43 39 870 verwiesen.

Mit Hilfe der Komponente (d) können Poly(oxyalkylen)gruppen als nichtionische stabilisierende Gruppen in die Polyurethanmoleküle eingeführt werden. Als Komponente (d) können beispielsweise eingesetzt werden: Alkoxypoly(oxyalkylen)alkohole mit der allgemeinen Formel R'O-(-CH₂-CHR"-O-)ₙ-H in der R' für einen Alkylrest mit 1 bis 6 Kohlenstoffatomen, R" für ein Wasserstoffatom oder einen Alkylrest mit 1 bis 6 Kohlenstoffatomen und n für eine Zahl zwischen 20 und 75 steht.

Die Komponente (f) dient zur Einführung von polymerisierbaren Doppelbindungen in die Polyurethanharzmoleküle. Es ist bevorzugt, als Komponente (f) eine Verbindung einzusetzen, die mindestens eine gegenüber NCO-Gruppen reakive Gruppe und eine polymerisierbare Doppelbindung enthält. Besonders bevorzugt werden als Komponente (f) Verbindungen eingesetzt, die neben einer polymerisierbaren Doppelbindung noch zwei gegenüber NCO-Gruppen reaktive Gruppen enthalten. Als Beispiele für gegenüber NCO-Gruppen reaktive Gruppen werden -OH, -SH, > NH und -NH₂-Gruppen genannt, wobei -OH, > NH und NH₂-Gruppen bevorzugt sind. Als Beispiele für Verbindungen, die als Komponente (f) eingesetzt werden können, werden genannt: Hydroxy(meth)acrylate, insbesondere Hydroxyalkyl(meth)acrylate wie Hydroxyethyl-, Hydroxypropyl-, Hydroxybutyl- oder Hydroxyhexyl(meth)acrylat und 2,3-Dihydroxypropyl(meth)acrylat, 2,3-Dihydroxypropylmonoallylether, 2,3-Dihydroxypropansäureallylester, Glycerinmono(meth)acrylat, Glycerinmonoallylether, Pentaerythritmono(meth)acrylat, Pentaerythritdi(meth)acrylat, Pentaerythritmonoallylether, Pentaeythritdiallylether, Trimethylolpropanmonoallylether, Trimethylolpropanmono(meth)acrylat und Trimethylolpropandiallylether. Als Komponente (f) wird vorzugsweise Trimethylolpropanmonoallylether, Glycerinmono(meth)acrylat, Pentaerythritdi(meth)acrylat, Pentaerythritdiallyether, Glycerinmonoallylether und Trimethylolpropanmono(meth)acrylat eingesetzt. Als Komponente (f) werden besonders bevorzugt Trimethylolpropanmonoallylether, Glycerinmonoallylether und 2,3-Dihydroxypropansäureallylester eingesetzt. Es ist bevorzugt, die (f) Komponenten, die mindestens zwei gegenüber NCO-Gruppen reaktive Gruppen enthalten, kettenständig (nicht endständig) in die Polyurethanmoleküle einzubauen.

Als Komponente (g) können beispielsweise Polyole mit Molekulargewichten zwischen 60 und 399, wie beispielsweise Ethylenglykol, Diethylenglykol, Triethylenglykol, 1,2-Propandiol, 1,3-Propandiol, 1,4-Butandiol, 1,2-Butylenglykol, 1,6-Hexandiol, Trimethylolpropan, Ricinusöl oder hydriertes Ricinusöl, Di-trimethylolpropanether, Pentaerythrit, 1,2-Cyclohexandiol, 1,4-Cyclohexandimethanol, Bisphenol A, Bisphenol F, Neopentylglykol, Hydroxypivalinsäureneopentylglykolester, hydroxyethyliertes oder hydroxypropyliertes Bisphenol A, hydriertes Bisphenol A und deren Mischungen eingesetzt werden. Die Polyole werden im allgemeinen in Mengen von bis zu 30 Gewichtsprozent, vorzugsweise 2 bis 20 Gewichtsprozent, bezogen auf die eingesetzte Menge an Komponente (a) und (g) eingesetzt.

Als Komponente (g) können auch Di- und/oder Polyamine mit primären und/oder sekundären Aminogruppen eingesetzt werden. Polyamine sind im wesentlichen Alkylen-Polyamine mit Molekulargewichten zwischen 60 und 399. Sie können Substituenten tragen, die keine mit Isocyanat-Gruppen reaktionsfähige Wasserstoffatome haben. Beispiele sind Polyamine mit linearer oder verzweigter aliphatischer, cycloaliphatischer oder aromatischer Struktur und wenigstens zwei primären Aminogruppen. Als Diamine sind zu nennen Hydrazin, Ethylendiamin, Propylendiamin, 1,4-Butylendiamin, Piperazin, 1,4-Cyclohexyldimethylamin, Hexamethylendiamin-1,6, Trimethylhexamethylendiamin, Menthandiamin, Isophorondiamin, 4,4'-Diaminodicyclohexylmethan und Aminoethylethanolamin. Bevorzugte Diamine sind Hydrazin, Alkyl- oder Cycloalkyldiamine wie Propylendiamine und 1-Amino-3-aminomethyl-3,5,5-trimethylcyclohexan. Es können auch Polyamine als Komponente (g) eingesetzt werden, die mehr als zwei Aminogruppen im Molekül enthalten. In diesen Fällen ist jedoch - z.B. durch Mitverwendung von Monoaminen - darauf zu achten, daß keine vernetzten Polyurethanharze erhalten werden. Solche brauchbaren Polyamine sind Diethylentriamin, Triethylentetramin, Dipropylentriamin und Dibutylentriamin. Als Beispiel für ein Monoamin wird Ethylhexylamin genannt.

Das in der erfindungsgemäßen Komponente B enthaltene Bindemittel ist erhältlich, indem in der oben beschrieben wäßrigen Polyurethanharzdispersion ein ethylenisch ungesättigtes Monomer oder ein Gemisch aus ethylenisch ungesättigten Monomeren in Gegenwart eines wasserunlöslichen Initiators oder einer Mischung aus wasserunlöslichen Initiatoren radikalisch polymerisiert wird, wobei das Gewichtsverhältnis zwischen dem Polyurethanharz und dem ethylenisch ungesättigten Monomer bzw. dem Gemisch aus ethylenisch ungesättigten Monomeren zwischen 1:10 und 10:1, vorzugsweise zwischen 1:2 und 2:1 liegt.

Als ethylenisch ungesättigte Monomeren können eingesetzt werden:
(i) aliphatische oder cycloaliphatische Ester der Acrylsäure oder Methacrylsäure, die weder Hydroxyl- noch Carboxylgruppen enthalten oder ein Gemisch aus solchen Estern und
(ii) mindestens eine Hydroxylgruppe im Molekül tragende ethylenisch ungesättigte Monomere oder ein Gemisch aus solchen Monomeren und
(iii) mindestens eine Carboxylgruppe im Molekül tragende ethylenisch ungesättigte Monomere oder ein Gemisch aus solchen Monomeren und
(iv) weitere von (i), (ii) und (iii) verschiedene ethylenisch ungesättigte Monomere oder ein Gemisch aus solchen Monomeren und
(v) polyungesättigte Monomere, insbesondere ethylenisch polyungesättigte Monomere
sowie Mischungen aus den Komponenten (i), (ii), (iii), (iv) und (v).

Als ethylenisch ungesättigte Monomere werden vorzugsweise Mischungen eingesetzt, die aus 40 bis 100 Gew.-%, vorzugsweise 60 bis 90 Gew.-% der Komponente (i), 0 bis 30 Gew.-%, vorzugsweise 0 bis 25 Gew.-% der Komponente (ii), 0 bis 10 Gew.-%, vorzugsweise 0 bis 5 Gew.-%, ganz besonders bevorzugt 0 Gew.-% der Komponente (iii) und 0 bis 50 Gew.-%, vorzugsweise 0 bis 30 Gew.-% der Komponente (iv) sowie 0 bis 5 Gew.-%, vorzugsweise 0 Gew.-% der Komponente (v), wobei die Summe der Gewichtsanteile von (i), (ii), (iii), (iv) und (v) stets 100 Gew.-% ergibt.

Als Komponente (i) können z.B. eingesetzt werden: Cyclohexylacrylat, Cyclohexylmethacrylat, Alkylacrylate und Alkylmethacrylate mit bis zu 20 Kohlenstoffatomen im Alkylrest, wie z.B. Methyl-,Ethyl-,Propyl-,Butyl-, Hexyl-, Ethylhexyl-, Stearyl- und Laurylacrylat und -methacrylat oder Gemische aus diesen Monomeren.

Als Komponente (ii) können z.B. eingesetzt werden: Hydroxyalkylester der Acrylsäure, Methacrylsäure oder einer anderen α,β-ethylenisch ungesättigten Carbonsäure. Diese Ester können sich von einem Alkylenglykol ableiten, das mit der Säure verestert ist, oder sie können durch Umsetzung der Säure mit einem Alkylenoxid erhalten werden. Als Komponente (ii) werden vorzugsweise Hydroxyalkylester der Acrylsäure und Methacrylsäure, in denen die Hydroxyalkylgruppe bis zu 6 Kohlenstoffatome enthält, oder Mischungen aus diesen Hydroxyalkylestern eingesetzt. Beispiele hierzu können der DE-A 43 39 870 entnommen werden.

Als Komponente (iii) werden vorzugsweise Acrylsäure und/oder Methacrylsäure eingesetzt. Es können aber auch andere ethylenisch ungesättigte Säuren mit bis zu 6 Kohlenstoffatomen im Molekül eingesetzt werden. Als Beispiele für solche Säuren werden Ethacrylsäure, Crotonsäure, Maleinsäure, Fumarsäure und Itaconsäure genannt.

Als Komponente (iv) können z.B. eingesetzt werden: vinylaromatische Kohlenwasserstoffe, wie Styrol, α-Alkylstyrol und Vinyltoluol, Acryl- und Methacrylamid und Acryl- und Methacrylnitril oder Gemische aus diesen Monomeren.

Als Komponenten (v) können Verbindungen eingesetzt werden, die mindestens zwei radikalisch polymerisierbare Doppelbindungen im Molekül enthalten. Als Beispiele werden genannt: Divinylbenzol, p-Methyldivinylbenzol, o-Nonyldivinylbenzol, Ethandioldi(meth)acrylat, 1,4-Butandioldi(meth)acrylat, 1,6-Hexandioldi(meth)acrylat, Trimethylolpropantri(meth)acrylat, Pentaerythritdi(meth)acrylat, Allylmethacrylat, Diallylphthalat, Butandioldivinylether, Divinylethylenharnstoff, Divinylpropylenharnstoff, Maleinsäurediallylester usw.

Als wasserunlösliche Initiatoren können beispielsweise wasserunlösliche Azoverbindungen und wasserunlösliche Peroxyverbindungen eingesetzt werden. Als Beispiele für wasserunlösliche Azoverbindungen werden 2,2-Azo-bis-(isobutyronitril), 2,2'-Azo-bis-(isovaleronitril), 1,1'-Azo-bis-(cyclohexancarbonitril) und 2,2'-Azo-bis-(2,4-dimethylvaleronitril) genannt. Als Beispiele für wasserunlösliche Peroxyverbindungen werden t-Amylperoxyethylhexanoat, t-Butylperoxyethylhexanoat, Dilaurylperoxid, Dibenzoylperoxid und 1,1-Dimethyl-3-hydroxybutyl-(1)-peroxyethylhexanoat genannt.

Es können selbstverständlich auch Polymerisationsregler zugesetzt werden.

Die Polymerisation des ethylenisch ungesättigten Monomers bzw. der Mischung aus ethylenisch ungesättigen Monomeren kann durchgeführt werden, indem das ethylenisch ungesättigte Monomer bzw. die Mischung aus ethylenisch ungesättigten Monomeren der wäßrigen Polyurethanharzdispersion langsam zugesetzt werden. Dabei ist es möglich, sowohl die gesamte Menge der Monomeren auf einmal zuzugeben als auch nur einen Teil vorzulegen und den Rest im Verlauf der Reaktion nachzudosieren. Die zu polymerisierenden Monomere können jedoch auch mit Hilfe eines Teils der Polyurethanharzdispersion und Wasser in eine Präemulsion gebracht werden, die dann langsam der Vorlage zugesetzt wird. Die Zulaufzeit der zu polymerisierenden Monomere beträgt im allgemeinen 2 bis 8, vorzugsweise etwa 3 bis 4 Stunden.

Die wasserunlöslichen Initiatoren können der Vorlage zugesetzt werden oder zusammen mit den Monomeren zugetropft werden. Sie können auch anteilsweise der Vorlage zugegeben werden, die einen Teil der Monomeren enthält. Der Rest an Initiator wird dann mit den restlichen Monomeren zudosiert. Die Reaktionstemperatur ergibt sich aus der Zerfallsgeschwindigkeit des Initiators bzw. Initiatorgemisches und kann gegebenenfalls durch geeignete organische Redoxsysteme herabgesetzt werden. Die Polymerisation des ethylenisch ungesättigten Monomers bzw. der Mischung aus ethylenisch ungesättigten Monomeren erfolgt im allgemeinen bei einer Temperatur von 30 bis 100°C, insbesondere bei einer Temperatur von 60 bis 95°C. Wenn bei Überdruck gearbeitet wird, können die Reaktionstemperaturen über 100 °C ansteigen.

Das ethylenisch ungesättigte Monomer bzw. das Gemisch aus ethylenisch ungesättigten Monomeren ist so auszuwählen, daß die auf die oben beschriebene Art und Weise erhaltenen Bindemittelpolymeren eine Hydroxylzahl von 0 bis 100 mg KOH/g, vorzugsweise 0 bis 80 mg KOH/g und eine Säurezahl von 10 bis 40 mg KOH/g, vorzugsweise 15 bis 30 mg KOH/g aufweisen.

Bevorzugt enthält die Komponente B mindestens ein rheologiesteuerndes Additiv. Gegebenenfalls kann die Komponente B noch weitere Hilfs- und Zusatzstoffe, ein oder mehrere wasserverdünnbare bzw. wasserdispergierbare Bindemittel und organische Lösemittel enthalten.

Als rheologiesteuerndes Additiv kommen Schichtsilikate, vernetzte polymere Mikroteilchen, wie sie beispielsweise in der EP-A 0 038 127 offenbart sind, und andere übliche rheologische Additive sowie deren Mischungen zum Einsatz. Besonders bevorzugt als Verdicker sind mit Schutzkolloiden modifizierte Schichtsilikate, wie sie beispielsweise in DE-A-37 07 388 beschrieben sind, und synthetische Polymere mit ionischen und/oder assoziativ wirkenden Gruppen, wie Polyvinylalkohol, Poly(meth)acrylamid, Poly(meth)acrylsäure, Polyvinylpyrrolidon, Styrol-Maleinsäureanhydrid- oder Ethylen-Maleinsäureanhydrid-Copolymere und ihre Derivate oder auch hydrophob modifizierte ethoxylierte Urethane oder Polyacrylate. Ganz besonders bevorzugt werden als Verdicker carboxylgruppenhaltige Polyacrylat-Copolymere mit einer Säurezahl von 60 bis 780 mg KOH/g, bevorzugt 200 bis 500 mg KOH/g bzw. deren Mischungen mit den oben beschriebenen modifizierten Schichtsilikaten eingesetzt.

Als weitere Bindemittelbestandteile in der Komponente B geeignet sind die bereits bei der Beschreibung der Komponente A aufgeführten wasserverdünnbaren bzw. wasserdispergierbaren Polyurethan-, Polyacrylat-, Polyester- und Aminoplastharze, so daß hier nur auf die vorgehende Beschreibung verwiesen wird. Im Unterschied zum Einsatz dieser Harze in der Komponente A können diese Bindemittel beim Einsatz in der Komponente B nicht nur als organische Lösung sondern auch bevorzugt in einer wasserenthaltenden Form eingesetzt werden. Diese Überführung der Harze in die wäßrige Phase erfolgt beispielsweise durch Neutralisation der Trägergruppen (zur Anionen- oder Kationenbildung fähige Gruppen, wie zum Beispiel Carboxylgruppen) und anschließendes Verdünnen mit Wasser, gegebenenfalls unter vorheriger teilweiser Entfernung des bei der Herstellung des Harzes eingesetzten organischen Lösemittels oder durch direkten Aufbau des Harzes in Gegenwart von Wasser. Wegen weiterer Einzelheiten sei auf die Literatur verwiesen, in denen die Herstellung der Harze beschrieben ist (vgl. z.B. DE-A 32 10 051, DE-A 26 24 442, DE-A 37 39 332, US-PS 4,719,132, EP-A 0 089 497, US-PS 4,558,090, US-PS 4,489,135, EP-A 0 038 127, DE-A 36 28 124, EP-A 0 158 099, DE-A 29 26 584, EP-A 0 195 931 und DE-A 33 21 180).

Ferner sind als weitere Bindemittelbestandteile für die Komponente B auch wasserverdünnbare bzw. wasserdispergierbare Polyurethanharze geeignet, die sich nicht in Form organischer Lösungen darstellen lassen. Dabei handelt es sich insbesondere um Polyurethanharze, bei denen das NCO-gruppenhaltige Präpolymer mit einem Polyamin als Modifizierungsmittel umgesetzt wurde.

Zur weiteren Beschreibung solcher Polyurethanharze sei auf DE-A 41 10 520 verwiesen.

Ferner sind als weitere wasserverdünnbare bzw. wasserdispergierbare Bindemittelbestandteile für die Komponente B auch die in der DE-A 38 41 540 beschriebenen wasserverdünnbaren Emulsionspolymere geeignet. Diese Emulsionspolymere sind näher in DE-A 41 10 520 beschrieben.

Die Komponente B kann außerdem gegebenenfalls noch ein oder mehrere organische Lösemittel sowie gegebenenfalls noch weitere übliche Hilfs- und Zusatzstoffe enthalten. Beispiele für geeignete organische Lösemittel sind die bereits bei der Beschreibung der Komponente A aufgeführten Lösemittel. Der Gehalt an organischem Lösemittel beträgt üblicherweise 0 bis 3 Gew.-%, bezogen auf das Gesamtgewicht der Komponente B. Beispiele für geeignete Hilfs- und Zusatzstoffe sind ebenfalls die bei der Beschreibung der Komponente A genannten Additive. Die Einsatzmenge dieser Additive beträgt üblicherweise 0 bis 10 Gew.-%, bezogen auf das Gesamtgewicht der Komponente B.

### Das Mischsystem

Das erfindungsgemäße Mischsystem besteht aus verschiedenen pigmenthaltigen Basisfarben (Komponente A) und mindestens einer wasserenthaltenden Komponente B. Je nach gewünschtem Farbton des wäßrigen Überzugsmittels werden dann zur Herstellung des wäßrigen Überzugsmittels eine oder mehrere Basisfarben des Mischsystems mit mindestens einer wasserenthaltenden Komponente B direkt vor der Applikation des wäßrigen Überzugsmittels gemischt. Typische Mischsysteme bestehen aus 15 bis 60, bevorzugt 20 bis 40, verschiedenen Basisfarben und aus 1 bis 5, bevorzugt 1 bis 3, verschiedenen Komponenten B.

Bezüglich der Beschreibung üblicher Mischmaschinen für die Bevorratung und Lagerung der Basisfarben und Mischungen wird nur auf die Literatur verwiesen, wie z. B. das Glasurit-Handbuch, 11. Auflage, Kurt R. Vincentz-Verlag, Hannover 1984, Seiten 544 bis 547.

Bevorzugte erfindungsgemäße Mischsysteme werden erhalten, wenn als Komponente A Basisfaben eingesetzt werden, die
Aa) 0,5 bis 70 Gew.-% mindestens eines Effektpigments und/oder mindestens eines farbgebenden Pigments,
Ab) 10 bis 80 Gew.-% mindestens eines wasserverdünnbaren oder wasserdispergierbaren Bindemittels und
Ac) mindestens ein organisches Lösemittel enthalten, wobei die Summe der Gewichtsanteile der Komponenten Aa bis Ac jeweils 100 Gew.-% beträgt.

Außerdem können die Basisfarben noch 0 bis 10 Gew.-%, bezogen auf das Gesamtgewicht der Komponente A, übliche Hilfs- und Zusatzstoffe enthalten. Besonders bevorzugt wird das Mischsystem aus Basisfarben, die nur Effektpigmente enthalten und Basisfarben, die nur farbgebende Pigmente enthalten, aufgebaut.

Besonders bevorzugte Basisfarben (Komponente A) auf der Basis von Effektpigmenten enthalten
Aa) 0,5 bis 50 Gew.-% mindestens eines Effektpigments,
Ab) 20 bis 80 Gew.-% mindestens eines wasserverdünnbaren oder wasserdispergierbaren Bindemittels und
Ac) mindestens ein organisches Lösemittel, wobei die Summe der Gewichtsanteile der Komponenten Aa bis Ac jeweils 100 Gew.-% beträgt.

Besonders bevorzugte Basisfarben (Komponente A) auf der Basis anorganischer farbgebender Pigmente enthalten
Aa) 1 bis 70 Gew.-% mindestens eines anorganischen farbgebenden Pigments,
Ab) 10 bis 80 Gew.-% mindestens eines wasserverdünnbaren oder wasserdispergierbaren Bindemittels und
Ac) mindestens ein organisches Lösemittel, wobei die Summe der Gewichtsanteile der Komponenten Aa bis Ac jeweils 100 Gew.-% beträgt.

Besonders bevorzugte Basisfarben (Komponente A) auf der Basis organischer farbgebender Pigmente enthalten
Aa) 1 bis 30 Gew.-% mindestens eines organischen farbgebenden Pigments,
Ab) 10 bis 80 Gew.-% mindestens eines wasserverdünnbaren oder wasserdispergierbaren Bindemittels und
Ac) mindestens ein organisches Lösemittel, wobei die Summe der Gewichtsanteile der Komponenten Aa bis Ac jeweils 100 Gew.-% beträgt.

Selbstverständlich können auch Basisfarben als Komponente A eingesetzt werden, die eine Kombination aus mindestens einem organischen farbgebenden und mindestens einem anorganischen farbgebenden Pigment enthalten.

Als Komponente B werden bevorzugt Mischungen eingesetzt, die
Ba) 60 bis 98 Gew.-%, bevorzugt 70 bis 95 Gew.-%, Wasser,
Bb) 0 bis 10 Gew.-%, bevorzugt 0,1 bis 5 Gew.-%, mindestens eines rheologiesteuernden Additives, wobei diese Menge auf das Gewicht des reinen Additivs ohne Lösemittelanteil bezogen ist und
Bc) 2 bis 39,9 Gew.-%, bevorzugt 5 bis 29,9 Gew.-% des Bindemittel-Polymers gemäß DE-A 43 39 870 sowie gegebenenfalls weitere wasserverdünnbare oder wasserdispergierbare Bindemittel
enthalten, wobei die Summe der Gewichtsanteile der Komponenten Ba bis Bc jeweils 100 Gew.-% beträgt.

Die verschiedenen Basisfarben A werden zur Herstellung der wäßrigen Überzugsmittel in einem solchen Verhältnis gemischt, daß der gewünschte Farbton resultiert. Das Mischungsverhältnis der Komponente A mit der oder den verschiedenen Komponenten B wird durch die Forderung bestimmt, daß das resultierende Überzugsmittel unabhängig vom Farbton die gewünschte Viskosität, den gewünschten Festkörpergehalt und den gewünschten Gehalt an organischen Lösemitteln usw. aufweist.

Der Festkörpergehalt (Menge an eingesetztem festen Bindemittel plus Menge an eingesetztem Pigment) sowie der Gehalt an organischem Lösemittel u.ä. variiert mit dem Verwendungszweck der wäßrigen Überzugsmittel.

Im Bereich der Autoreparaturlacke liegt der Festkörpergehalt für Metalliclacke bevorzugt bei 7 bis 30 Gew.-% und für unifarbige Lacke bevorzugt bei 10 bis 45 Gew.-%, jeweils bezogen auf das Gesamtgewicht der wäßrigen Überzugsmittel.

Eine bevorzugte Ausführungsform des erfindungsgemäßen Mischsystems ist ein Mischsystem, bei dem alle Basisfarben das gleiche bzw. im Falle einer Bindemittelmischung die gleichen Bindemittel enthalten. Besonders bevorzugt weisen alle Basisfarben des Mischsystems das gleiche Verhältnis der Menge an eingesetztem festen Bindemittel (d.h. ohne Lösemittel) zu der Menge an eingesetztem organischen Lösemittel auf.

Dies gewährleistet, daß - unabhängig vom gewünschten Farbton und somit unabhängig vom Mischungsverhältnis der verschiedenen Basisfarben - die resultierende Mischung der verschiedenen Basisfarben stets das gleiche Bindemittel:Lösemittel-Verhältnis hat und damit unabhängig vom Farbton ein etwa gleichbleibendes Abdunstverhalten (Trocknung) sowie eine ähnliche Rheologie zeigt. Dieses konstante Bindemittel:Lösemittel-Verhältnis in allen Basisfarben gewährleistet außerdem, daß auch gegebenenfalls das Verhältnis Bindemittel (gelöst):Bindemittel (dispergiert) im fertigen wäßrigen Lack konstant ist.

Der Einsatz von verschiedenen Basisfarben mit jeweils identischem Bindemittel:Lösungsmittel-Verhältnis weist den praktischen Vorteil auf, daß unabhängig vom jeweils gewünschten Farbton konstante Filmeigenschaften erzielt werden.

Die unter Verwendung des erfindungsgemäßen Mischsystems hergestellten wäßrigen Überzugsmittel können auf die verschiedensten Substrate, wie z. B. Metall, Holz, Kunststoff oder Papier aufgebracht werden. Insbesondere eignen sich die mittels des erfindungsgemäßen Mischsystems hergestellten wäßrigen Überzugsmittel für die Reparaturlackierung von Schadstellen, insbesondere für die Autoreparaturlackierung. Die Überzugsmittel werden in diesem Fall direkt nach ihrer Herstellung durch Mischen der Komponenten A und B auf die entsprechend vorbereitete Schadstelle (z. B. durch Spachteln und Füllern) mittels üblicher Methoden, insbesondere Spritzen, aufgebracht. Bevorzugt werden die unter Verwendung des erfindungsgemäßen Mischsystems hergestellten wäßrigen Überzugsmittel zur Erzeugung einer Basisschicht eingesetzt.

Nach Antrocknung der so hergestellten Basisschicht bei Raumtemperatur oder durch forcierte Trocknung (z.B. 10 Minuten bei 60°C, 80°C oder IR-Trocknung) wird eine geeignete transparente Deckbeschichtungszusammensetzung aufgebracht. Als Decklack geeignet sind sowohl organisch gelöste als auch wäßrige 1- oder 2-Komponenten-Klarlacke sowie Pulverklarlacke. Häufig eingesetzt werden 2-Komponenten-Klarlacke auf Basis eines hydroxylgruppenhaltigen Acrylatcopolymerisates und eines Polyisocyanates. Derartige Klarlacke sind beispielsweise in den Patentanmeldungen DE-A 34 12 534, DE-A 36 09 519, DE-A 37 31 652 und DE-A 38 23 005 beschrieben. Geeignete 1-Komponenten-Klarlacke, beispielsweise auf Basis eines hydroxylgruppenhaltigen Bindemittels und eines Aminoharzhärters sind ebenfalls bekannt und beispielsweise im Kittel, Lehrbuch der Lacke und Beschichtungen, Band IV; Verlag W.A. Colomb in der H. Heeremann GmbH, Berlin-Oberschwandorf 1976 beschrieben. Selbstverständlich sind aber auch alle anderen, hier nicht explizit genannten Klarlacke geeignet.

Nach einer gegebenenfalls erforderlichen Ablüftzeit von etwa 5 Minuten wird dann die Basisschicht zusammen mit der Deckschicht getrocknet. Bei Verwendung von 2-Komponenten-Klarlacken erfolgt die Trocknung im allgemeinen bei Temperaturen von unter 100°C, bevorzugt von unter 80°C. Die Trockenfilmschichtdicken der Basisschicht liegen im allgemeinen zwischen 5 und 25 µm, die der Deckschicht im allgemeinen zwischen 30 und 70 µm.

Bei Verwendung von 1-Komponenten-Klarlacken wird die Basisschicht zusammen mit der Deckschicht bei erhöhten Temperaturen, z.B. ca. 120°C, getrocknet. Die Trockenfilmschichtdicken der Deckschicht liegen hier im allgemeinen zwischen 30 und 50 µm.

Im folgenden wird die Erfindung anhand von Ausführungsbeispielen näher erläutert. Alle Angaben über Teile und Prozente stellen dabei Gewichtsangaben dar, falls nicht ausdrücklich etwas anderes vermerkt ist.

### Beipiele

### 1. Herstellung des Bindemittels für die Komponente A

In einem geeigneten Reaktionsgefäß mit Rührer, Rückflußkühler und Zulaufgefäß werden unter Schutzgas 686,3 g eines Polyesters mit einem zahlenmittleren Molekulargewicht von 1400 auf Basis einer handelsüblichen ungesättigten Dimerfettsäure (mit einer Jodzahl von 10 mg J₂/g, einem Monomerengehalt von maximal 0,1 %, einem Trimergehalt von maximal 2 %, einer Säurezahl von 195 bis 200mg KOH/g und einer Verseifungszahl von 197 bis 202 mgKOH/g), Isophthalsäure und Hexandiol vorgelegt und nacheinander mit 10,8 g Hexandiol, 55,9 g Dimethylolpropionsäure, 344,9 g Methylethylketon und 303,6 g 4,4'-Di(isocyanatocyclohexyl)methan versetzt. Diese Mischung wird so lange unter Rückfluß gehalten, bis der Isocyanatgehalt auf 1,0 % abgesunken ist. Anschließend werden dem Gemisch 26,7 g Trimethylolpropan zugegeben und bis zu einer Viskosität von 12 dPas (bei einer Anlösung von 1:1 = Harzlösung/N-Methylpyrrolidon) unter Rückfluß gehalten. Dann werden 1378,7 g Butylglykol zugegeben. Nach einer Vakuumdestillation, in der das Methylethylketon entfernt wird, wird die Harzlösung mit 32,7 g Dimethylethanolamin neutralisiert. Der Feststoffgehalt der resultierenden Harzlösung beträgt 44 %.

Die erhaltene Masse wird unter intensivem Rühren mit Butylglykol auf einen Festkörper von 41 Gew.-% verdünnt.

### 2. Herstellung des erfindungsgemäßen Bindemittels für die Komponente B

In einem Reaktionsgefäß mit Rührer, Innenthermometer, Rückflußkühler und elektrischer Heizung werden 178,5 g eines linearen Polyesters (aufgebaut aus dimerisierter Fettsäure (Pripol® 1013), Isophthalsäure und Hexandiol-1,6) mit einer Hydroxylzahl von 80 und einem zahlenmittleren Molekulargewicht Mn von 1400 nach Zusatz von 20,8 g Dimethylolpropionsäure und 7,4 g Trimethylolpropanmonoallylether in 44,6 g N-Methylpyrrolidon und 80,9 g Methylethylketon gelöst. Danach werden bei 45°C 90,7 g Isophorondiisocyanat zugegeben. Nach Abklingen der exothermen Reaktion wird langsam auf 80°C erwärmt. Es wird bei dieser Temperatur gehalten, bis der NCO-Gehalt 1,8 % beträgt. Dann werden nach Abkühlen auf 50°C schnell hintereinander 14,9 g Triethylamin und 535,3 g deionisiertes Wasser zugegeben. Nach 15 Minuten wird dem gut dispergierten Harz ein Gemisch aus 7,6 g Aminoethylethanolamin und 19,3 g deionisiertem Wasser zugesetzt. Anschließend wird die Temperatur auf 60°C erhöht und das Methylethylketon im Vakuum abdestilliert. Die so erhaltene Dispersion weist einen Feststoffgehalt von 34,3 Gew.% (60 Minuten bei 130°C) und einen pH-Wert von 8,0 auf

514,7 g der oben hergestellten Polyurethanharzdispersion werden mit 277,7 g deionisiertem Wasser verdünnt. Nach Erwärmen auf 85°C wird ein Gemisch aus 50,1 g Styrol, 50,1 g Methylmethacrylat, 37,5 g n-Butylacrylat und 37,5 g Hydroxyethylmethacrylat innerhalb von 3,5 Stunden langsam zugegeben. Mit Beginn der Zugabe dieser Mischung wird eine Lösung von 2,6 g tert.-Butylperoxyethylhexanoat in 30 g Methoxypropanol innerhalb von 4 Stunden zugegeben. Anschließend wird so lange bei 85°C gehalten bis die Monomeren vollständig abreagiert sind. Gegebenenfalls wird Initiator nachgegeben. Schließlich wird gegebenenfalls angefallenes Koagulat abfiltriert. Das Gewichtsverhältnis Polyurethanharz zu Acrylatmonomeren beträgt 1:1. Die so erhaltene Dispersion zeigt eine sehr gute Lagerstabilität und weist einen Feststoffgehalt von 34,8 Gew.-% (60 Minuten bei 130°C) und einen pH-Wert von 7,2 auf.

### 3. Herstellung einer Polyurethanharzdispersion als weiteren Bindemittelbestandteil für die Komponente B

In einem geeigneten Reaktionsgefäß mit Rührer, Rückflußkühler und Zulaufgefäß werden unter Schutzgas 686,3 g eines Polyesters mit einem zahlenmittleren Molekulargewicht von 1400 auf Basis einer handelsüblichen ungesättigten Dimerfettsäure (mit einer Jodzahl von 10 mg J₂/g, einem Monomergehalt von maximal 0,1 %, einem Trimergehalt von maximal 2 %, einer Säurezahl von 195 bis 200 mgKOH/g und einer Verseifungszahl von 197 bis 202 mgKOH/g), Isophthalsäure und Hexandiol vorgelegt und nacheinander mit 10,8 g Hexandiol, 55,9 g Dimethylolpropionsäure, 344,9 g Methylethylketon und 303,6 g 4,4'-Di(isocyanatocyclohexyl)methan versetzt. Diese Mischung wird so lange unter Rückfluß gehalten, bis der Isocyanatgehalt auf 1,0 % abgesunken ist. Anschließend werden dem Gemisch 26,7 g Trimethylolpropan zugegeben und bis zu einer Viskosität von 12 dPas (bei einer Anlösung von 1:1 = Harzlösung/N-Methylpyrrolidon) unter Rückfluß gehalten. Durch Zugabe von 47,7 g Butylglykol wird eventuell vorhandenes überschüssiges Isocyanat vernichtet. Anschließend werden dem Reaktionsgemisch 32,7 g Dimethylethanolamin, 2688,3 g entionisiertes Wasser und 193,0 g Butylglykol unter starkem Rühren zugegeben. Nach dem Entfernen des Methylethylketons mittels Vakuumdestiallation erhält man eine Dispersion mit einem Feststoffgehalt von ca. 27 %.

### 4. Herstellung verschiedener Basisfarben A

Im folgenden wird das erfindungsgemäße Mischsystem beispielhaft anhand der Herstellung eines blauen Metalliclacks erläutert. Selbstverständlich sind zur Herstellung anderer Farbtöne anders pigmentierte Basisfarben erforderlich.

### 4.1. Herstellung einer Aluminium enthaltenden Basisfarbe A1

17,5 Teile einer gemäß DE-A 36 36 183 chromatierten Aluminiumbronze (Aluminiumgehalt 65 %, durchschnittlicher Teilchendurchmesser 15 µm) werden in 16 Teilen Butylglykol durch 15 minütiges Rühren homogen verteilt und anschließend in eine Mischung aus 56,5 Teilen der 41%igen, neutralisierten Polyurethanharzlösung gemäß Beispiel 1 und 10 Teilen eines handelsüblichen, methylveretherten Melaminharzes (75 %ig in iso-Butanol) unter Rühren einfließen lassen. Diese Mischung wird weitere 30 Minuten mit einem Schnellrührer bei 1000 U/min gerührt.

### 4.2. Herstellung einer blaupigmentierten Basisfarbe A2

7,5 Teile Paliogenblau, 64 Teile der 41%igen, neutralisierten Polyurethanharzlösung gemäß Beispiel 1, 11,5 Teile eines handelsüblichen, methylveretherten Melaminharzes (75%-ig in iso-Butanol) und 17 Teile Butylglykol werden unter Rührer vermischt und mit einer Sandmühle dispergiert.

### 5. Herstellung der pigmentfreien Komponente B

### 5.1. Herstellung einer pigmentfreien Komponente B1 enthaltend das erfindungsgemäße Bindemittel gemäß Beispiel 2

Zu 44 Teilen Polyurethanharzdispersion gemäß Beispiel 2 werden 51 Teile entionisiertes Wasser, 0,5 Teile eines handelsüblichen Entschäumers und 4,5 Teile einer 3,5%igen Lösung eines handelsüblichen Polyacrylatverdickers in Wasser unter Rühren zugesetzt.

### 5.2. Herstellung einer pigmentfreien Komponente B1' ohne erfindungsgemäßes Bindemittel enthaltend das Bindemittel gemäß Beispiel 3 (Vergleich)

Es wird vorgegangen wie in Beispiel 5.1. mit dem Unterschied, daß 56,5 Teile Polyurethanharzdispersion gemäß Beispiel 3 und 38,5 Teile deionisiertes Wasser eingesetzt werden.

Aus den Komponenten A und Komponenten B wurden die wäßrigen Basisbeschichtungszusammensetzungen 1 bis 3 hergestellt (wie in der Tabelle 1 beschrieben), indem 6,5 Teile der Basisfarbe A1 und 5,3 Teile der Basisfarbe A2 direkt nach ihrer Herstellung in 88,2 Teile der jeweiligen Mischung B1 und B1'(Vergleich) eingerührt wurden. Anschließend wurde die Viskosität durch Zugabe von entionisiertem Wasser auf eine Auslaufzeit von 20 s im DIN4-Becher (bei 20°C) eingestellt.

Direkt im Anschluß nach der Herstellung der wäßrigen Basisbeschichtungszusammensetzungen wurden sie nach gut bekannten Methoden auf mit einer handelsüblichen Elektrotauchlackierung und einem konventionellen (d.h. lösemittelhaltigen) oder wasserhaltigen Füller beschichtete phosphatierte Stahlbleche (Bonder 132) gespritzt, nach einer Ablüftzeit von 30 Minuten bei Raumtemperatur (bei einer relativen Luftfeuchtigkeit von 50% und einer Raumtemperatur von 20°C) mit einem handelsüblichen konventionellen 2-Komponenten-Klarlack auf Basis eines hydroxylgruppenhaltigen Acrylatcopolymerisates und eines Isocyanatvernetzers überlackiert und 30 Minuten bei 60°C getrocknet. Die Trockenfilmschichtdicke der Basisbeschichtungszusammensetzung beträgt 15 µm, die des Klarlackes 50 µm.

### Beipiel 6: Prüfung der Haftung der Klarlackschicht

Es werden Prüfungen der Klarlackschicht nach Schwitzwasser-Belastung durchgeführt.

### Haftungprüfung der mit Schwitzwasser belasteten Klarlackschicht:

Die Haftungsprüfung erfolgt nach Schwitzwasserbelastung, welche nach DIN 5001KK durchgeführt wird, mittels Gitterschnitt-Test nach EN ISO 2409 nach 0, 2 und 24 Stunden Regeneration.

**Tabelle:**

| Ergebnisse der Haftungsprüfungen | | |
|---|---|---|
| **Basislack** | **B1** | **B1'** |
| Haftung Schwitzwasser: 0 Stunden Regeneration | 2 | 5 |
| 2 Stunden Regeneration | 1-2 | 4 |
| 24 Stunden Regeneration | 0 | 0 |

Bei sonst vergleichbaren Eigenschaften zeigt der Aufbau mit dem Basislack, enthaltend die erfindungsgemäße Komponente B1, im Vergleich zum Aufbau, enthaltend die Komponente B1', eine deutlich höhere Schwitzwasserbeständigkeit.

## Patentansprüche

1. Mischsystem zur Herstellung von wasserverdünnbaren Überzugsmitteln mit genau festgelegter Tönung aus verschiedenen Basisfarben, bestehend aus:
A) verschiedenen Basisfarben A, die weniger als 5 Gew.-% Wasser, mindestens ein farb- und/oder effektgebendes Pigment, organisches Lösemittel, mindestens ein wasserverdünnbares oder wasserdispergierbares Bindemittel sowie gegebenenfalls Hilfs- und Zusatzstoffe enthalten, und
B) mindestens einer Wasser und Bindemittel enthaltenden, pigmentfreie Komponente B,
**dadurch gekennzeichnet, daß** das Bindemittel in Komponente B mindestens ein Polymer enthält, das erhältlich ist, indem in einer wäßrigen Dispersion eines Polyurethanharzes, das ein zahlenmittleres Molekulargewicht von 1000 bis 30.000 Dalton aufweist und im statistischen Mittel 0,05 bis 1,1 polymerisierbare Doppelbindungen enthält, ein ethylenisch ungesättigtes Monomer oder ein Gemisch aus ethylenisch ungesättigten Monomeren in Gegenwart eines wasserunlöslichen Initiators oder einer Mischung aus wasserunlöslichen Initiatoren polymerisiert wird, wobei das Gewichtsverhältnis zwischen dem Polyurethanharz aus dem ethylenisch ungesättigten Monomeren bzw. dem Gemisch aus ethylenisch ungesättigten Monomeren zwischen 1:10 und 10:1 liegt.

2. Mischsystem nach Anspruch 1, **dadurch gekennzeichnet, daß** das für die Herstellung des Polymeren eingesetzte Polyurethanharz anionisch ist und eine Säurezahl zwischen 20 und 60 mg KOH/g aufweist.

3. Mischsystem nach Anspruch 1 oder 2, **dadurch gekennzeichnet, daß** das für die Herstellung des Polymeren eingesetzte Polyurethanharz Acrylat-, Methacrylat- und/oder Allylethergruppen als polymerisierbare Doppelbindungen enthaltende Gruppen enthält.

4. Mischsystem nach einem der Ansprüche 1 bis 3, **dadurch gekennzeichnet, daß** die verschiedenen Basisfarben A wasserfrei sind.

5. Mischsystem nach einem der Ansprüche 1 bis 4, **dadurch gekennzeichnet, daß** die Komponente B mindestens ein rheologiesteuerndes Additiv sowie gegebenenfalls weitere Hilfs- und Zusatzstoffe enthält.

6. Mischsystem nach Anspruch 5, **dadurch gekennzeichnet, daß** als rheologiesteuerndes Additiv ein carboxylgruppenhaltiges Polyacrylatcopolymer mit einer Säurezahl von 60 bis 780 eingesetzt wird.

7. Mischsystem nach einem der Ansprüche 1 bis 6, **dadurch gekennzeichnet, daß** die Basisfarben A als Bindemittel mindestens ein Polyurethanharz und/oder Aminoplastharz enthalten.

8. Mischsystem nach einem der Ansprüche 1 bis 7, **dadurch gekennzeichnet, daß** die verschiedenen Basisfarben A jeweils
Aa) 0,5 bis 70 Gew.-% mindestens eines farb- und/oder effektgebenden Pigments,
Ab) 10 bis 80 Gew.-% mindestens eines wasserverdünnbaren oder wasserdispergierbaren Bindemittels und
Ac) mindestens ein organisches Lösemittel sowie gegebenenfalls Hilfs- und Zusatzstoffe enthalten, wobei die Summe der Gewichtsanteile der Komponenten Aa bis Ac jeweils 100 Gew.-% beträgt.

9. Mischsystem nach einem der Ansprüche 1 bis 8, **dadurch gekennzeichnet, daß** das Mischsystem
Ba) 60 bis 98 Gew.-%, bevorzugt 70 bis 95 Gew.-%, Wasser,
Bb) 0 bis 10 Gew.-%, bevorzugt 0,1 bis 5 Gew.-%, mindestens eines rheologiesteuernden Additives, wobei diese Menge auf das Gewicht des reinen Additivs ohne Lösemittelanteil bezogen ist und
Bc) 2 bis 39,9 Gew.-%, bevorzugt 5 bis 29,9 Gew.-% des Bindemittel-Polymers gemäß den Ansprüchen 1 bis 3 sowie gegebenenfalls weitere wasserverdünnbare oder wasserdispergierbare Bindemittel enthält.

10. Mischsystem nach einem der Ansprüche 1 bis 9, **dadurch gekennzeichnet, daß** die verschiedenen Basisfarben A das gleiche Bindemittel oder bei Bindemittelmischungen die gleichen Bindemittel im gleichen Mischungsverhältnis zueinander enthalten.

11. Mischsystem nach einem der Ansprüche 1 bis 10, **dadurch gekennzeichnet, daß** die verschiedenen Basisfarben A das gleiche Verhältnis von festem Bindemittel zu organischem Lösungsmittel aufweisen und/oder daß das Verhältnis von festem Bindemittel zu Lösemittel im fertigen wäßrigen Überzugsmittel konstant ist.

12. Verfahren zur Herstellung von wasserverdünnbaren Überzugsmitteln mit genau festgelegter Tönung, bei dem verschiedene Basisfarben eines Mischsystems getrennt hergestellt und gelagert werden und erst kurz vor der Applikation des Überzugsmittels gemischt werden, **dadurch gekennzeichnet, daß** ein Mischsystem nach einem der Ansprüche 1 bis 11 eingesetzt wird und die wasserverdünnbaren Überzugsmittel durch Mischen mindestens einer Basisfarbe A und mindestens einer Komponente B des Mischsystems hergestellt werden.

13. Verwendung des Mischsystmes nach einem der Ansprüche 1 bis 12 zur Herstellung von Wasserbasislacken für die Beschichtung von Automobilkarossen und/oder Kunststoffteilen.

14. Verwendung des Mischsystems nach einem der Ansprüche 1 bis 12 zur Herstellung von wäßrigen Überzugsmitteln für die Reparaturlackierung.

## Claims

1. Mixer system for preparing water-thinnable coating compositions with precisely defined tinting from various base colours, consisting of:
A) various base colours A which contain less than 5% by weight of water, at least one colouring and/or special-effect pigment, organic solvent, at least one water-thinnable or water-dispersible binder and, if desired, auxiliaries and additives, and
B) at least one water- and binder-containing, pigment-free component B,
**characterized in that** the binder in component B comprises at least one polymer which is obtainable by subjecting an ethylenically unsaturated monomer or a mixture of ethylenically unsaturated monomers to polymerization in the presence of a water-insoluble initiator or a mixture of water-insoluble initiators and in an aqueous dispersion of a polyurethane resin which has a number-average molecular weight of from 1000 to 30,000 daltons and contains on average from 0.05 to 1.1 polymerizable double bonds, the weight ratio between the polyurethane resin and the ethylenically unsaturated monomer or the mixture of ethylenically unsaturated monomers lying between 1:10 and 10:1.

2. Mixer system according to Claim 1, **characterized in that** the polyurethane resin employed for the preparation of the polymer is anionic and has an acid number of between 20 and 60 mg KOH/g.

3. Mixer system according to Claim 1 or 2, **characterized in that** the polyurethane resin employed for the preparation of the polymer comprises acrylate, methacrylate and/or allyl ether groups as groups containing polymerizable double bonds.

4. Mixer system according to one of Claims 1 to 3, **characterized in that** the various base colours A are free of water.

5. Mixer system according to one of Claims 1 to 4, **characterized in that** component B comprises at least one rheology-controlling additive and also, if desired, further auxiliaries and additives.

6. Mixer system according to Claim 5, **characterized in that** a carboxyl-containing polyacrylate copolymer having an acid number of from 60 to 780 is employed as rheology-controlling additive.

7. Mixer system according to one of Claims 1 to 6, **characterized in that** the base colours A comprise as binder at least one polyurethane resin and/or amino resin.

8. Mixer system according to one of Claims 1 to 7, **characterized in that** the various base colours A comprise in each case
Aa) from 0.5 to 70% by weight of at least one colouring and/or special-effect pigment,
Ab) from 10 to 80% by weight of at least one water-thinnable or water-dispersible binder, and
Ac) at least one organic solvent, and also, if desired, auxiliaries and additives, the sum of the proportions by weight of components Aa to Ac being in each case 100% by weight.

9. Mixer system according to one of Claims 1 to 8, **characterized in that** the mixer system comprises
Ba) from 60 to 98% by weight, preferably from 70 to 95% by weight, of water,
Bb) from 0 to 10% by weight, preferably from 0.1 to 5% by weight, of at least one rheology-controlling additive, this amount being based on the weight of the pure additive without solvent fraction, and
Bc) from 2 to 39.9% by weight, preferably from 5 to 29.9% by weight, of the binder polymer according to Claims 1 to 3 and also, if desired, further water-thinnable or water-dispersible binders.

10. Mixer system according to one of Claims 1 to 9, **characterized in that** the various base colours A comprise the same binder or, in the case of binder mixtures, the same binders in the same mixing proportion to one another.

11. Mixer system according to one of Claims 1 to 10, **characterized in that** the various base colours A have the same ratio of solid binder to organic solvent and/or **in that** the ratio of solid binder to solvent in the finished aqueous coating composition is constant.

12. Process for preparing water-thinnable coating compositions with precisely defined tinting, in which various base colours of a mixer system are prepared separately and stored and are not mixed until shortly before the application of the coating composition, **characterized in that** a mixer system according to one of Claims 1 to 11 is employed and the water-thinnable coating compositions are prepared by mixing at least one base colour A and at least one component B of the mixer system.

13. Use of the mixer system according to one of Claims 1 to 12 for preparing waterborne paints for the coating of car bodies and/or plastic parts.

14. Use of the mixer system according to one of Claims 1 to 12 for preparing aqueous coating compositions for repair painting (refinishing).

## Revendications

1. Système de mélange en vue de la fabrication d'agents de revêtement hydrodiluables à teinte exactement déterminée à partir de différentes couleurs de base, se composant de:
A) de différentes couleurs de base A, qui contiennent moins de 5% en poids d'eau, au moins un pigment conférant une couleur et/ou un effet, un solvant organique, au moins un liant hydrodiluable ou hydrodispersible ainsi que, le cas échéant, des adjuvants et des additifs, et
B) au moins un composant B, exempt de pigments, contenant de l'eau et des liants,
**caractérisé en ce que** le liant dans le composant B contient au moins un polymère, que l'on peut obtenir, en polymérisant, dans une dispersion aqueuse d'une résine de polyuréthanne, qui présente un poids moléculaire moyen en nombre de 1000 à 30000 Daltons et qui contient, en moyenne statistique, de 0,05 à 1,1 liaisons doubles polymérisables, un monomère éthyléniquement insaturé ou un mélange de monomères éthyléniquement insaturés, en présence d'un agent initiateur non hydrosoluble ou d'un mélange d'agents initiateurs non hydrosolubles, le rapport en poids entre la résine de polyuréthanne provenant du monomère éthyléniquement insaturé, respectivement du mélange de monomères éthyléniquement insaturés se situant entre 1:10 et 10:1.

2. Système de mélange selon la revendication 1, **caractérisé en ce que** la résine de polyuréthanne, utilisée pour la préparation du polymère, est anionique et présente un indice d'acide compris entre 20 et 60 mg de KOH/g.

3. Système de mélange selon la revendication 1 ou 2, **caractérisé en ce que** la résine de polyuréthanne, utilisée pour la préparation du polymère, contient des groupements contenant, en tant que liaisons doubles polymérisables, des groupements acrylate, méthacrylate et/ou des groupements d'éthers allyliques.

4. Système de mélange selon l'une quelconque des revendications 1 à 3, **caractérisé en ce que** les différentes couleurs de base A sont exemptes d'eau.

5. Système de mélange selon l'une quelconque des revendications 1 à 4, **caractérisé en ce que** le composant B contient au moins un additif contrôlant la rhéologie ainsi que, le cas échéant, des adjuvants et des additifs supplémentaires.

6. Système de mélange selon la revendication 5, **caractérisé en ce que** l'on utilise, en tant qu'additif contrôlant la rhéologie, un copolymère de polacrylate contenant des groupements carboxyles, ayant un indice d'acidité allant de 60 à 780.

7. Système de mélange selon l'une quelconque des revendications 1 à 6, **caractérisé en ce que** les couleurs de base A contiennent, en tant que liant, au moins une résine de polyuréthanne et/ou une résine aminoplaste.

8. Système de mélange selon l'une quelconque des revendications 1 à 7, **caractérisé en ce que** les différentes couleurs de base A contiennent à chaque fois
Aa) de 0,5 à 70% en poids d'au moins un pigment conférant une couleur et/ou un effet,
Ab) de 10 à 80% en poids d'au moins un liant hydrodiluable ou hydrodispersible et
Ac) au moins un solvant organique ainsi que, le cas échéant, des adjuvants et des additifs, la somme des proportions en poids des composants Aa à Ac étant, à chaque fois, de 100% en poids.

9. Système de mélange selon l'une quelconque des revendications 1 à 8, **caractérisé en ce que** le système de mélange contient
Ba) de 60 à 98% en poids, de préférence de 70 à 95% en poids d'eau,
Bb) de 0 à 10% en poids, de préférence de 0,1 à 5% en poids d'au moins un additif contrôlant la rhéologie, cette quantité se rapportant au poids de l'additif pur sans proportion de solvant et
Bc) de 2 à 39,9% en poids, de préférence de 5 à 29,9% en poids du polymère-liant, conformément aux revendications 1 à 3, ainsi que, le cas échéant, des liants hydrodiluables ou hydrodispersibles supplémentaires.

10. Système de mélange selon l'une quelconque des revendications 1 à 9, **caractérisé en ce que** les différentes couleurs de base A contiennent le même liant ou, dans le cas de mélanges de liants, les mêmes liants dans le même rapport de mélange les uns par rapport aux autres.

11. Système de mélange selon l'une quelconque des revendications 1 à 10, **caractérisé en ce que** les différentes couleurs de base A présentent le même rapport liant solide à solvant organique et/ou **en ce que** le rapport liant solide à solvant est constant dans l'agent de revêtement aqueux fini.

12. Procédé en vue de la préparation d'agents de revêtements hydrodiluables à teinte exactement déterminée, lors duquel différentes couleurs de base d'un système de mélange sont préparées et stockées de manière séparée et ne sont mélangées que peu de temps avant l'application de l'agent de revêtement, **caractérisé en ce que** l'on utilise un système de mélange selon l'une quelconque des revendications 1 à 11 et **en ce que** les agents de revêtement hydrodiluables sont préparés par le mélange d'au moins une couleur de base A et d'au moins un composant B du système de mélange.

13. Utilisation du système de mélange selon l'une quelconque des revendications 1 à 12, en vue de la préparation de vernis à base d'eau pour le revêtement de carrosseries d'automobiles et/ou des pièces en matière synthétique.

14. Utilisation du système de mélange selon l'une quelconque des revendications 1 à 12 en vue de la préparation d'agents de revêtement aqueux pour le vernissage de réparation.
